# EUROPÄISCHE PATENTSCHRIFT

(11) **EP 1 988 204 B1**
(45) Veröffentlichungstag und Bekanntmachung des Hinweises auf die Patenterteilung: **31.08.2011**
(21) Anmeldenummer: 08007480.0
(22) Anmeldetag: 17.04.2008
(51) Int. Cl.: D05C 17/02, B32B 5/26, B60R 13/02, D06N 7/00, D04H 11/08, D04H 13/00

(54) **Verfahren zur Herstellung eines verformbaren Tuftprodukts, insbesondere einer verformbaren getufteten Teppichoberschicht, insbesondere für den Automobilinnenbereich**
Method for producing a reformable tufting product, in particular a reformable tufted carpet upper layer, in particular for automobile interiors
Procédé de fabrication d'un produit de touftage déformable, en particulier d'une couche supérieure de tapis toufté déformable, en particulier pour la zone intérieure d'une automobile

(30) Priorität: 02.05.2007 DE 102007020818
(43) Veröffentlichungstag der Anmeldung: 05.11.2008
(73) Patentinhaber: Carl Freudenberg KG, 69469 Weinheim (DE)
(72) Erfinder: Maass, Ulrike, 67659 Kaiserslautern (DE); Sander, Peter, 66892 Bruchmühlbach (DE); Emirze, Ararad, 67659 Kaiserslautern (DE)

(56) Entgegenhaltungen:
- EP-A1- 0 018 789
- EP-A1- 0 030 126
- EP-A1- 1 964 956
- WO-A1-2004/071758
- DE-A1- 19 506 845

## Beschreibung

### Technisches Gebiet

Die Erfindung betrifft ein Verfahren zur Herstellung eines verformbaren Tuftprodukts, insbesondere einer verformbarer getufteter Teppichoberschicht, insbesondere für den Automobilinnenbereich.

Zur Herstellung eines Tuftteppichs wird das sogenannte Tuften oder Tufting, das heißt eine Technik zur Herstellung dreidimensionaler Flächen, eingesetzt, die nach dem Prinzip einer Nähmaschine funktioniert.

Dabei bringen Tuftnadeln ein Tuftgam in ein Grundmaterial, den sogenannten Tuftingträger, ein. Die an einer Nadelstange montierten Tuftnadeln sind in der Breite des Grundmaterials, beispielsweise eines Vliesstoffs, angeordnet und stechen gleichzeitig durch das Grundmaterial. Bevor die Tuftnadeln wieder nach oben in ihre Ausgangsstellung zurückkehren, wird das eingebrachte Tuftgam auf der Unterseite des Grundmaterials von Greifern, sogenannten Loopem, festgehalten. So entstehen Schlaufen oder Schlingen, sogenannte Noppen, die im fertigen Teppich die Sichtseite (Oberschicht) bilden.

Je nach Anwendung können diese Schlingen unter Einsatz spezieller Messer bereits während des Tuftvorgangs geschnitten werden. Dabei entsteht der sogenannte Veloursteppich, der speziell im Automobilinnenbereich, bevorzugt mit einem Anteil von über 95%, eingesetzt wird.

EP 1 964 956 A1 beschreibt ein Verfahren zur Herstellung eines hochfesten leichten Tuftingträgers, wobei wenigstens eine Lage aus synthetischen Filamenten, bevorzugt aus Polyester und/oder aus einem Polyolefin, mittels eines Spinnvliesprozesses abgelegt wird, wenigstens eine dünne Schicht aus einem thermisch aktivierbaren Bindemittel aufgebracht wird, die Spinnvliesfilamente verfestigt und das Bindemittel verteilt wird mittels energiereicher Hochdruckwasserstrahlen, anschließend getrocknet und das Bindemittel zur Aktivierung thermisch behandelt wird.

EP 0 030 126 A1 beschreibt ein Verfahren zur Herstellung eines getufteten Florgewebes, wobei ein erster Rücken umfassend Polypropylen, Polyester, Polyamid, Jute oder Viskose bereitgestellt wird und beidseitig mit einer schmelzbaren Faserlage, bevorzugt aus Polyamid, versehen wird, getuftet wird und die rückseitige, tufteinstichfeme Faserlage geschmolzen wird.

EP 0 018 789 A1 offenbart ein Verfahren zur Herstellung eines getufteten Materials, umfassend einen ersten Rücken und zumindest zwei Lagen einaxial orientierter Filme durch die Florfaserelemente getuftet sind, wobei ein Laminat gebildet wird, umfassend zwei ununterbrochene Lagen einaxial orientierter Filme, wobei jeder Film zur spontanen Fibrillierung geeignet ist, die genannten Lagen im Wesentlichen durchgängig entlang ihrer Oberflächen gebunden werden, wobei das Laminat vor dem Tuften in einem unfibrillierten Zustand gehalten wird und das Laminat mit Florfaserelementen getuftet wird, wodurch jede Lage zur Fibrillierung veranlasst wird.

DE 195 06 845 A1 beansprucht ein Verfahren zur Herstellung von Teppichböden, Teppichen, Auslegeware oder dergleichen, wobei eine Filamente aufweisende Nutzschicht bzw. ein Pol (Faserbüschel) zunächst insbesondere durch Tuften mit einer Tragschicht (Mischvlies) verbunden wird, dadurch gekennzeichnet dass die Polfixierung und/oder Filamenteinbindung durch einen Schmelzvorgang im Bereich der Tragschicht erfolgt, und dass hierzu die Tragschicht entsprechend schmelzbare Bestandteile oder Zusätze aufweist oder mit einer entsprechend schmelzbare Bestandteile oder Zusätze aufweisenden zusätzlichen Schicht versehen ist.

WO 2004/071758 A1 betrifft einen getufteten Teppich für den Automobilbereich mit verbesserten akustischen Eigenschaften, umfassend zwei Rücken, einen Rücken gebildet aus gewebten, ungewebtem oder spinngebundenen Material, einen Rücken gebildet aus spinngebundenem Mikrofilamentmaterial und einem Haftgewebe zwischen diesen beiden Rücken für eine Thermobindung, wobei beide Rücken mit einer Vielzahl von Gamnoppen vernäht sind.

### Darstellung der Erfindung

Die Erfindung hat sich die Aufgabe gestellt, ein möglichst einfaches und wirtschaftliches Verfahren zur Herstellung eines verformbaren Tuftprodukts, insbesondere einer besonders gut verformbaren getufteten Teppichoberschicht, anzugeben. Die nach dem Verfahren hergestellte Teppichoberschicht soll dabei insbesondere im Automobilinnenbereich oder im Objektbereich Verwendung finden. Mit dem Begriff "Objektbereich" ist gemeint, dass die Teppichoberschicht besonders für stark bis extrem beanspruchte Flächen ausgelegt ist, insbesondere für Büros, Hotels, Flughäfen, Krankenhäuser etc.,

Die Lösung der gestellten Aufgabe wird mit den Merkmalen des Anspruchs 1, 2 oder 3 erreicht.

Bei dem Verfahren wird ein Meltblown-Vliesstoff auf einen verformbaren Polyester-Tuftingträger gelegt, und der Meltblown-Vliesstoff und der Polyester-Tuftingträger werden gemeinsam getuftet. Durch die Aufbringung des Meltblown-Vliesstoffs auf den Tuftingträger synchron zum Tuftingprozess ist das Verfahren besonders wirtschaftlich.

Das gemeinsame Tuften des Meltblown-Vliesstoffs und des Polyester-Tuftingträgers erfolgt entweder ohne vorherige Vernadelung oder Kalandrierung mit einer Tuftteilung von 0,003175 m bis 0,0015875 m (1/8" bis 1/16").

Alternativ wird der Meltblown-Vliesstoff durch einen Ultraschallkalander mit einer Verschweißfläche von kleiner als 5 %, bevorzugt von kleiner als 2 %, verfestigt und gemeinsam mit dem Polyester-Tuftingträger mit einer Tuftteilung von 0,003175 m bis 0,0015875 m (1/8" bis 1/16") getuftet.

Alternativ werden der Meltblown-Vliesstoff und der Polyester-Tuftingträger gemeinsam durch einen Ultraschallkalander mit einer Verschweißfläche von kleiner als 5 %, bevorzugt von kleiner als 2 %, verfestigt und anschließend gemeinsam mit einer Tufteilung von 0,003175 m bis 0,0015875 m (1/8" bis 1/16") getuftet.

Durch die gemeinsame Verfestigung ist eine besonders gute Handhabbarkeit und bessere Prozessstabilität als bei getrennten Schichten gewährleistet. Des Weiteren erlaubt die Kombination mit der sehr geringen Verschweißfläche gleichzeitig eine ausreichend hohe Fasermobilität, so dass Faserbeschädigungen beim Tuften zumindest vermindert werden und somit die Tuftproduktqualität, insbesondere bezüglich der Verformbarkeit, erhöht wird.

Aufgrund der speziellen Kombination der Materialwahl und der Verfahrensgestaltung zeichnet sich das daraus hergestellte Tuftprodukt, insbesondere für die Anwendung im Automobilinnenbereich als Automobilteppichoberschicht, durch eine besonders gute Verformbarkeit und entsprechend hohe Festigkeits-, Dehnungs- und Weiterreißkraftdaten aus.

In bevorzugter Ausgestaltung des Verfahrens wird das Tuftprodukt allein durch eine thermische Behandlung von der Tufteinstichseite, insbesondere ohne Vorstrich, in den weiteren Teppichherstellungsprozess eingeführt.

Bei der Tuftingherstellung stellt der Vorstrich die Vorbehandlung der Rohware für verschiedene Verfahren der Rücken- oder Tuftingträgerbeschichtung dar. Der Vorstrich stellt die Verankerung der Polnoppen im Grundmaterial bzw. Tuftingträger dar. Man erreicht dadurch die gewünschte Einbindung der Noppen und verhindert das Fadenziehen oder Ausfransen des Polmaterials. Das Vorstrichmaterial besteht üblicherweise aus Synthese-Latex mit Füllmaterial.

Durch den Wegfall dieses Latex-Vorstrichs beim erfindungsgemäßen Herstellungsprozess, entfällt ein Prozessschritt. Zudem wird die Umwelt entlastet, da beim Herstellungs-, Recycling- und Entsorgungsprozess das Abwasser nicht durch Latexreste belastet wird, und da es beim Gebrauch des derart behandelten Tuftprodukts nicht zur Emissionsbildung durch den Latex-Vorstrich kommt.

Folglich genügt das erfindungsgemäße Verfahren auch den insbesondere in letzter Zeit erhöhten Umweltauflagen und Industriestandards.

Vorteilhafterweise wird für das Verfahren als Polyester-Tuftingträger ein Polyester-Spinnvliesstoff, bevorzugt mit einem Flächengewicht von 70 g/m² bis 140 g/m² eingesetzt, weiter bevorzugt von 100 g/m² bis 120 g/m².

Des Weiteren wird bei dem Verfahren der Meltblown-Vliesstoff mit einem Flächengewicht von bevorzugt 70 g/m² bis 500 g/m² eingesetzt, weiter bevorzugt von 80 g/m² bis 200 g/m², noch weiter bevorzugt von 80 g/m² bis 130 g/m².

Durch die besonders geringen Flächengewichte kann der Materialverbrauch besonders gering gehalten werden und die Verarbeitungsgeschwindigkeit erhöht werden, wodurch zusätzlich Kosten eingespart werden können.

In bevorzugter Ausgestaltung des Verfahrens wird als Rohstoff des Meltblown-Vliesstoffs ein thermoplastischer, spinnbarer oder spritzgussverarbeitbarer Rohstoff eingesetzt, insbesondere ausgewählt aus Polyolefinen, Copolyolefinen, Polyestern, Copolyestern, Polyamiden und/oder Copolyamiden mit einem MFI-Wert (Melt-Flow-Index, Schmelzflussindex) ISO 1133 von 100 bis 300 g/ 10 min.

Durch die niedrige Viskosität des Meltblown-Rohstoffs aufgrund eines hohen Schmelzflussindizes und die niedrige Viskosität des daraus hergestellten Meltblown-Vliesstoffs wird das Durchdringen der geschmolzenen Meltblown-Vliesstoff-Nutzschicht in den getufteten Tuftingträger begünstigt. Die Folge ist, dass eine dreidimensionale Verbundschicht erzeugt wird, so dass eine unerwünschte Delaminierung zwischen der Nutzschicht und dem Tuftingträger verhindert wird.

Vorzugsweise wird ein Meltblown-Vliesstoff mit einer Dicke von 0,5 mm bis 1,5 mm eingesetzt, bevorzugt von 0,5 mm bis 1,0 mm.

Der Fasertiter des Meltblown-Vliesstoffs beträgt vorteilhafterweise 0,06 dtex bis 0,2 dtex, bevorzugt 0,06 dtex bis 0,1 dtex.

Die voluminöse, weiche Meltblown-Vliesstoff-Nutzschicht mit hoher spezifischer Faseroberfläche, niedrigem Fasertiter und hoher Fasermobilität erleichtert das Zusammentuften ohne Nadelabweichung und erhöht die Anzahl der Berührungspunkte zwischen der Meltblown-Vliesstoff-Nutzschicht und den Fasern des Tuftingträgers, wodurch der Verbund zwischen der Nutzschicht und dem Tuftingträger gleichmäßig über den Querschnitt verstärkt wird.

Als weiterer Teppichherstellungsprozess wird bevorzugt ein Akustikvliesstoff und/oder zumindest andere isolierende Schicht, beispielsweise eine Schwerschicht mit Flächengewichten von z.B. 2 bis 7 kg/m² aus EthylenVinylacetat/ Ethylen-Propylen-Dien-Kautschuk oder aus coextrudierter Folie mit PolyethylenlPolyamid/(Polyethylen), auf die Tufteinstichseite des Tuftprodukts aufgebracht.

Die erfindungsgemäß hergestellten Tuftprodukte weisen mit einer Weiterreißkraft in Längsrichtung bei Raumtemperatur (nach DIN 53859-3) von bevorzugt 170 N bis 240 N einen besonders hohen Weiterreißkraftwert und damit eine besonders gute Verformbarkeit auf, so dass diese Tuftprodukte besonders gut zur Verwendung als Teppichoberschicht im Automobillinnenbereich als Automobilteppichoberschicht geeignet sind.

Die verformbaren Tuftprodukte, insbesondere die verformbaren getufteten Automobilteppichoberschichten, weisen ferner bei Raumtemperatur bevorzugt
- eine Höchstzugkraft in Längsrichtung (nach EN 29073-3) von 250 N/5cm bis 400 N/5cm, weiter bevorzugt von 275 N/5cm bis 375 N/5cm,
- eine Höchstzugkraft in Querrichtung (nach EN 29073-3) von 180 N/5cm bis 300 N/5cm, weiter bevorzugt von 203 N/5cm bis 250 N/5cm,
- eine Höchstzugdehnung in Längsrichtung (nach EN 29073-3) von 45 % bis 60 % und
- eine Höchstzugdehnung in Querrichtung (nach EN 29073-3) von 42 % bis 55 % auf.

Bei 140 °C weisen die verformbaren Tuftprodukte, insbesondere die verformbaren getufteten Automobilteppichoberschichten, vorteilhafterweise
- eine Höchstzugkraft in Längsrichtung (nach EN 29073-3) von 185 N/5cm bis 200 N/5cm,
- eine Höchstzugkraft in Querrichtung (nach EN 29073-3) von 85 N/5cm bis 120 N/5cm,
- eine Höchstzugdehnung in Längsrichtung (nach EN 29073-3) von 65 % bis 70 % und
- eine Höchstzugdehnung in Querrichtung (nach EN 29073-3) von 65 % bis 70 % auf.

### Ausführung der Erfindung

Der Gegenstand der Erfindung wird anhand eines Beispiels näher erläutert.

### Herstellung eines Meltblown-Vliesstoffs:

Als Rohstoff für den Meltblown-Vliesstoff wird Polyethylen mit einem Schmelzflussindex (MFI) von 155 g/10 min nach ISO 1133 eingesetzt und durch eine Meltblown-Düse gesponnen. Die dabei gewonnenen Polyethylenfasem weisen einen Fasertiter von 0,07 dtex auf.

Die Fasern werden anschließend auf einer Saugtrommel abgelegt, welche ungefähr einen Abstand von 600 mm zu der Spinndüse hat, um ein voluminöses und weiches Vlies herzustellen, dessen Faserbeweglichkeit im Tuftingprozess erhalten bleibt.

Das derart hergestellte 80 g schwere Vlies kann anschließend optional durch einen Ultraschallkalander mit leichten Sonotrodenpressdrücken von etwa 0,006 bar mit einer Verschweißfläche von kleiner als 5 %, bevorzugt von kleiner als 2 %, verfestigt werden, so dass ein noch weitgehend voluminöser Vliesstoff erhalten wird. Alternativ ist auch eine leichte thermische Verfestigung über gravierte oder aufgerauhte Kalanderwalzen denkbar.

### Herstellung eines Tuftprodukts:

Der nach dem zuvor beschriebenen Verfahren hergestellte 80 g schwere Meltblown-Vliesstoff wird vorliegend in nicht-vorverfestigter Form auf den Tuftingträger gelegt und erst gemeinsam mit dem Tuftingträger durch einen Ultraschallkalander mit leichten Sonotrodenpressdrücken von etwa 0,006 bar mit einer Verschweißfläche von ca. 1,6 % verfestigt. Als Tuftingträger wird ein Polyester-Spinnvliesstoff Lutradur ® LDT 5312 (Freudenberg) mit einem Flächengewicht von 120 g/m² eingesetzt.

Dieser leicht Ultraschall-vorverfestigte Verbund aus Meltblown-Vliesstoff und Polyester-Tuftingträger wird dem Tuftstuhleinlauf zugeführt, wobei die Meltblown-Vliesstoffseite die Nadel- bzw. Tufteinstichseite darstellt.

Der Labortuftstuhl hat eine Nadelarbeitsbreite von ca. 50 cm und eine Nadelteilung von 1/10 Zoll (10 Nadeln pro 2,54 cm) Veloursqualität.

Die Stichdichte beträgt ca. 56/10 cm. Als Tuftgam ist ein sogenanntes BCF-Gam, das für bulked continuous filament (Endlosgam) steht, eingesetzt, das eine Polyamid 6 Qualität mit der Gesamtstärke von 1300 dtex und 128 Einzelfilamenten besitzt. Andere übliche Tuftgame können ebenfalls eingesetzt werden.

Das Tuftgamgewicht liegt bei etwa 400 g/m², Die komplette Labortuftinganordnung erzeugt in Schmalbreite eine im Automobilbereich üblich eingesetzte Teppichkonstruktion (mit Ausnahme der zusätzlich eingebrachten Schicht).

Bevor die Tuftnadeln wieder zurücklaufen, wird das eingebrachte Tuftgam von Greifem festgehalten, so dass Schlaufen oder Noppen entstehen. Auf diese Weise entsteht ein Schlingenflorteppich. Wenn die Schlingen, wie hier, mit einem Messer aufgeschnitten werden, entsteht ein Schnittflor- bzw. Veloursteppich.

Nach dem Zusammentuften des Meltblown-Vliesstoffs mit dem Polyester-Tuftingträger erfolgt von der Tufteinstichseite her eine thermische Behandlung bis das Polyethylen des Meltblown-Vliesstoffs geschmolzen ist. Die derart hergestellte Teppichoberschicht wird auf die folgenden Eigenschaften hin untersucht.

Eigenschaften der derart hergestellten Teppichoberschicht bei

### Raumtemperatur:

- Höchstzugkraft in Längsrichtung (nach EN 29073-3): 368 N/5cm
- Höchstzugkraft in Querrichtung (nach EN 29073-3): 203 N/5cm
- Höchstzügdehnung in Längsrichtung (nach EN 29073-3): 58 %
- Höchstzugdehnung in Querrichtung (nach EN 29073-3); 44 %
- Weiterreißkraft in Längsrichtung (nach DIN 53859-3): 218 N

Je höher die Werte der Weiterreißkraft sind, desto höher ist die Verformbarkeit.

Zum Vergleich beträgt die Weiterreißkraft des getufteten Tuftingträgers allein (Lutradur ® LDT 53 12, 120 g/m²), das heißt ohne den Meltblown-Vliesstoff, 198 N, und die Weiterreißkraft des getufteten Tuftingträgers (Lutradur ® LDT 5312, 120 g/m²) mit einer herkömmlichen Vorstrich- bzw. Latex-Binder-Behandlung (ca. 100 g/m²) 150 N.

Durch eine herkömmliche Vorstrichbehandlung wird die Verformbarkeit folglich negativ beeinflusst, während das erfindungsgemäß hergestellte Tuftprodukts einen besonders hohen Weiter-eißkraftwert und damit eine besonders gute Verformbarkeit aufweist, so dass dieses Tuftprodukt besonders gut zur Verwendung als Teppichoberschicht im Automobillinnenbereich geeignet ist.

### Eigenschaften der derart hergestellten Teppichoberschicht bei 140 °C:

- Höchstzugkraft in Längsrichtung (nach EN 29073-3): 196 N/5cm
- Höchstzugkraft in Querrichtung (nach EN 29073-3): 111 N/5cm
- Höchstzugdehnung in Längsrichtung (nach EN 29073-3): 75 %
- Höchstzugdehnung in Querrichtung (nach EN 29073-3): 69%

Neben der Ermittlung des Kraft- und Dehnungsverhaltens des Tuftprodukts durch Messungen an einer Zug-Dehnungsprüfmaschine wurden die Verformungseigenschaften des Tuftprodukts durch eine interne Messmethode bestimmt. Dabei werden kreisförmige Proben des Tuftprodukts mit einem Durchmesser von 24 cm werden ausgestanzt, in einem Klemmring eingespannt und durch Messingschrauben und Gewindebolzen fixiert. Die fixierte Probe wird rückseitig, das heißt von der Tufteinstichseite, durch Infrarot-Heizung auf eine bestimmte Temperatur erhitzt, vorliegend auf 140 °C erhitzt, wobei ein Abstand von 16 cm zum Infrarotfeld konstant eingehalten wird.

Nach Erreichen der Temperatur wird der Klemmring mit der fixierten Teppichprobe automatisch auf einen beweglichen hohlen Zylinder aufgelegt, der mit einer Geschwindigkeit von 50 mm/s gegen eine Metallkugel hochfährt. Die Metallkugel ist mit Wasser auf 18°C gekühlt und hat einen Durchmesser von 10 cm. Die Teppichprobe wird dabei von der Tufteinstichseite verformt. Aus den gemessenen Verformungstiefen wird die prozentuale Verformung errechnet.

Bei einer maximalen Verformungstiefe von 12,2 cm beträgt
- der maximale Verformungsgrad: 106 % und
- die maximale Verformungskraft: 1543 N

Bei einer Verformungstiefe von 9 cm beträgt
- der maximale Verformungsgrad: 50 % und
- die maximale Verformungskraft: 723 N.

Das erfindungsgemäß hergestellte Ausführungsbeispiel der Teppichoberschicht hat den weiteren Vorteil, dass es ohne zusätzlichen, in der herkömmlichen Teppichindustrie üblichen Polyethylen-Puderauftrag mit einer Schwerschicht kaschiert laminiert werden kann. Der Verzicht auf diesen Polyethylen-Puderauftrag ist darauf zurückzuführen, dass auf der Teppicheinstichseite der Teppichoberschicht des Ausführungsbeispiels bereits eine Haftvermittlerschicht aus Polyethylen vorliegt.

## Patentansprüche

1. Verfahren zur Herstellung eines verformbaren Tuftprodukts, insbesondere einer verformbaren getufteten Teppichoberschicht, insbesondere für den Automobilinnenbereich, wobei ein Meltblown-Vliesstoff auf einen verformbaren Polyester-Tuftingräger gelegt wird, und wobei der Meltblown-Vliesstoff und der Polyester-Tuftingträger mit einer Tuftteilung von 0,003175 m bis 0,0015875 m (1/8" bis 1/16") ohne vorherige Vemadelung oder Kalandrierung gemeinsam getuftet werden.

2. Verfahren zur Herstellung eines verformbaren Tuftprodukts, insbesondere einer verformbaren getufteten Teppichoberschicht, insbesondere für den Automobilinnenbereich, wobei ein Meltblown-Vliesstoff auf einen verformbaren Polyester-Tuftingträger gelegt wird, und wobei der Meltblown-Vliesstoff durch einen Ultraschallkalander mit einer Verschweißfläche von kleiner als 5 %, bevorzugt von kleiner als 2 %, verfestigt wird und gemeinsam mit dem Polyester-Tuftingträger mit einer Tuftteilung von 0,003175 m bis 0,0015875 m (1/8" bis 1/16") getuftet wird.

3. Verfahren zur Herstellung eines verformbaren Tuftprodukts, insbesondere einer verformbaren getufteten Teppichoberschicht, insbesondere für den Automobilinnenbereich, wobei ein Meltblown-Vliesstoff auf einen verformbaren Polyester-Tuftingträger gelegt wird, und wobei der Meltblown-Vliesstoff und der Polyester-Tuftingträger gemeinsam durch einen Ultraschallkalander mit einer Verschweißfläche von kleiner als 5 %, bevorzugt von kleiner als 2 %, verfestigt werden und gemeinsam mit einer Tuftteilung von 0,003175 m bis 0,0015875 m (1/8" bis 11/6") getuftet werden.

4. Verfahren nach einem der vorhergehenden Ansprüche, wobei das Tuftprodukt allein durch eine thermische Behandlung von der Tufteinstichseite, insbesondere ohne Vorstrich, in den weiteren Teppichherstellungsprozess eingeführt wird.

5. Verfahren nach einem der vorhergehenden Ansprüche, wobei als Polyester-Tuftingträger ein Polyester-Spinnvliesstoff, bevorzugt mit einem Flächengewicht von 70 g/m² bis 140 g/m², weiter bevorzugt von 100 g/m² bis 120 g/m², eingesetzt wird.

6. Verfahren nach einem der vorhergehenden Ansprüche, wobei der Meltblown-Vliesstoff mit einem Flächengewicht von 70 g/m² bis 500 g/m², bevorzugt von 80 g/m² bis 200 g/m², weiter bevorzugt von 80 g/m² bis 130 g/m², eingesetzt wird.

7. Verfahren nach einem der vorhergehenden Ansprüche, wobei als Rohstoff des Meltblown-Vliesstoffs ein thermoplastischer, spinnbarer oder spritzgussverarbeitbarer Rohstoff eingesetzt wird, insbesondere ausgewählt aus Polyolefinen, Copolyolefinen, Polyestern, Copolyestern, Polyamiden und/oder Copolyamiden mit einem MFI-Wert nach ISO 1133 von 100 bis 300 g/10 min.

8. Verfahren nach einem der vorhergehenden Ansprüche, wobei der Meltblown-Vliesstoff mit einer Dicke von 0,5 mm bis 1,5 mm, bevorzugt von 0,5 mm bis 1,0 mm, eingesetzt wird.

9. Verfahren nach einem der vorhergehenden Ansprüche, wobei der Meltblown-Vliesstoff mit einem Fasertiter von 0,06 dtex bis 0,2 dtex, bevorzugt von 0,06 dtex bis 0,1 dtex, eingesetzt wird.

10. Verfahren nach einem der Ansprüche 4 bis 9, wobei als weiterer Teppichherstellungsprozess ein Akustikvliesstoff und/oder zumindest eine andere isolierende Schicht auf die Tufteinstichseite des Tuftprodukts aufgebracht wird.

## Claims

1. A method of producing a formable tufted product, more particularly a formable tufted top layer of a carpet, more particularly for the automotive interior, wherein a melt-blown nonwoven is laid on a formable tufting base of polyester, and wherein the melt-blown nonwoven and the polyester tufting base are conjointly tufted using a tufting gauge of 0.003175 m to 0.0015875 m (1/8" to 1/16") without prior needling or calendering.

2. A method of producing a formable tufted product, more particularly a formable tufted top layer of a carpet, more particularly for the automotive interior, wherein a melt-blown nonwoven is laid on a formable tufting base of polyester, and wherein the melt-blown nonwoven is consolidated by means of an ultrasonic calender having a welding area of less than 5% and preferably of less than 2%, and is conjointly tufted with the polyester tufting base using a tufting gauge of 0.003175 m to 0.0015875 m (1/8" to 1/16").

3. A method of producing a formable tufted product, more particularly a formable tufted top layer of a carpet, more particularly for the automotive interior, wherein a melt-blown nonwoven is laid on a formable tufting base of polyester, and wherein the melt-blown nonwoven and the polyester tufting base are conjointly consolidated by means of an ultrasonic calender having a welding area of less than 5% and preferably of less than 2%, and is conjointly tufted using a tufting gauge of 0.003175 m to 0.0015875 m (1/8" to 1/16").

4. A method according to any preceding claim, wherein the tufted product is introduced into the further carpetmaking process solely through a thermal treatment from the tuft insertion side, more particularly without precoat.

5. A method according to any preceding claim, wherein the polyester tufting base used is a polyester spunbonded nonwoven, preferably with a basis weight of 70 g/m² to 140 g/m² and more preferably of 100 g/m² to 120 g/m².

6. A method according to any preceding claim, wherein the melt-blown nonwoven is used with a basis weight of 70 g/m² to 500 g/m², preferably of 80 g/m² to 200 g/m² and more preferably of 80 g/m² to 130 g/m².

7. A method according to any preceding claim, wherein the raw material used for the melt-blown nonwoven is a thermoplastic, spinnable or injection-mouldable raw material, more particularly selected from polyolefins, copolyolefins, polyesters, copolyesters, polyamides and/or copolyamides with an MFI value to ISO 1133 of 100 to 300 g/10 min.

8. A method according to any preceding claim, wherein the melt-blown nonwoven is used with a thickness of 0.5 mm to 1.5 mm and preferably of 0.5 mm to 1.0 mm.

9. A method according to any preceding claim, wherein the melt-blown nonwoven is used with a fibre linear density of 0.06 dtex to 0.2 dtex and preferably of 0.06 dtex to 0.1 dtex.

10. A method according to any one of Claims 4 to 9, wherein as further carpetmaking process an acoustical nonwoven and/or at least another insulating layer is applied to the tuft insertion side of the tufted product.

## Revendications

1. Procédé de fabrication d'un produit de touffetage déformable, notamment d'une couche supérieure de tapis touffetée déformable, notamment pour la zone intérieure d'automobiles, dans lequel un non-tissé obtenu par soufflage à l'état fondu est placé sur un support de touffetage en polyester déformable, et dans lequel le non-tissé obtenu par soufflage à l'état fondu et le support de touffetage en polyester sont touffetés ensemble avec un espacement des touffes de 0,003175 m à 0,0015875 m (1/8" à 1/16") sans aiguilletage ou calandrage préalable.

2. Procédé de fabrication d'un produit de touffetage déformable, notamment d'une couche supérieure de tapis touffetée déformable, notamment pour la zone intérieure d'automobiles, dans lequel un non-tissé obtenu par soufflage à l'état fondu est placé sur un support de touffetage en polyester déformable, et dans lequel le non-tissé obtenu par soufflage à l'état fondu est consolidé par une calandre à ultrasons ayant une surface de soudure inférieure à 5 %, de préférence inférieure à 2 %, et touffeté avec le support de touffetage en polyester avec un espacement des touffes de 0,003175 m à 0,0015875 m (1/8" à 1/16").

3. Procédé de fabrication d'un produit de touffetage déformable, notamment d'une couche supérieure de tapis touffetée déformable, notamment pour la zone intérieure d'automobiles, dans lequel un non-tissé obtenu par soufflage à l'état fondu est placé sur un support de touffetage en polyester déformable, et dans lequel le non-tissé obtenu par soufflage à l'état fondu et le support de touffetage en polyester sont consolidés ensemble par une calandre à ultrasons ayant une surface de soudure inférieure à 5 %, de préférence inférieure à 2 %, et touffetés ensemble avec un espacement des touffes de 0,003175 m à 0,0015875 m (1/8 " à 1/16").

4. Procédé selon l'une quelconque des revendications précédentes, dans lequel le produit de touffetage est introduit dans le procédé de fabrication de tapis ultérieur seulement par un traitement thermique du côté de piqûre des touffes, notamment sans précouche.

5. Procédé selon l'une quelconque des revendications précédentes, dans lequel un non-tissé filé en polyester, ayant de préférence un poids superficiel de 70 g/m² à 140 g/m², de manière davantage préférée de 100 g/m² à 120 g/m², est utilisé en tant que support de touffetage en polyester.

6. Procédé selon l'une quelconque des revendications précédentes, dans lequel un non-tissé obtenu par soufflage à l'état fondu ayant un poids superficiel de 70 g/m² à 500 g/m², de préférence de 80 g/m² à 200 g/m², de manière davantage préférée de 80 g/m² à 130 g/m², est utilisé.

7. Procédé selon l'une quelconque des revendications précédentes, dans lequel une matière première thermoplastique filable ou usinable par moulage par injection est utilisée en tant que matière première du non-tissé obtenu par soufflage à l'état fondu, notamment choisie parmi les polyoléfines, les copolyoléfines, les polyesters, les copolyesters, les polyamides et/ou les copolyamides ayant une valeur MFI selon ISO 1133 de 100 à 300 g/10 min.

8. Procédé selon l'une quelconque des revendications précédentes, dans lequel un non-tissé obtenu par soufflage à l'état fondu ayant une épaisseur de 0,5 mm à 1,5 mm, de préférence de 0,5 mm à 1,0 mm, est utilisé.

9. Procédé selon l'une quelconque des revendications précédentes, dans lequel un non-tissé obtenu par soufflage à l'état fondu ayant un titre de fibre de 0,06 dtex à 0,2 dtex, de préférence de 0,06 dtex à 0,1 dtex, est utilisé.

10. Procédé selon l'une quelconque des revendications 4 à 9, dans lequel un non-tissé acoustique et/ou au moins une autre couche isolante est appliquée sur le côté de piqûre des touffes du produit de touffetage en tant que procédé de fabrication de tapis supplémentaire.
